# EUROPEAN PATENT APPLICATION

(11) **EP 4 756 280 A1**
(43) Date of publication of application: **10.06.2026**
(21) Application number: 23948562.6
(22) Date of filing: 04.08.2023
(51) Int. Cl.: F16M 11/04, F16M 11/06, F16M 11/18

(54) **DISPLAY DEVICE**

(71) Applicant: LG Electronics Inc., Yeongdeungpo-gu Seoul 07336 (KR)
(72) Inventor: KIM, Yongnam, Seoul 06772 (KR); SOHN, Youngwook, Seoul 06772 (KR); KIM, Miju, Seoul 06772 (KR); SUH, Eugene, Seoul 06772 (KR); JOO, Junghyun, Seoul 06772 (KR); OH, Minkyu, Seoul 06772 (KR); HWANG, Sunggul, Seoul 06772 (KR)
(74) Representative: Vossius & Partner Patentanwälte Rechtsanwälte mbB
(86) International application number: PCT/KR2023/011497
(87) International publication number: WO 2025/033567

(57) **Abstract**

A display device is disclosed. The display device of the present disclosure may include: a head including a display panel; a pole elongated and positioned behind the head; a link extending in a direction intersecting the pole between the head and the pole, and having one end pivotably coupled to the pole; and a gas spring extending in a direction intersecting the link between the head and the link, coupled to the head, and pivotably coupled to the other end of the link.

## Description

### TECHNICAL FIELD

The present disclosure relates to a display device.

### BACKGROUND ART

With the development of information society, there has been a growing demand for various types of display devices. In order to meet such demand, various display devices, such as a liquid crystal display (LCD) device, a plasma display panel (PDP), an electro luminescent display (ELD), a vacuum fluorescent display (VFD), an organic light emitting diode (OLED) display, and the like, have been developed and used.

Among them, an LCD panel includes a TFT substrate and a color substrate that are opposite each other with a liquid crystal layer interposed therebetween, and can display an image using light provided from a backlight unit. In addition, an OLED panel can display an image by depositing a self-luminescent organic layer on a substrate having a transparent electrode formed thereon.

Recently, numerous research has been conducted on a structure for freely adjusting the angle or position of a display.

### DETAILED DESCRIPTION OF INVENTION

### TECHNICAL PROBLEMS

An object of the present disclosure is to solve the above and other problems.

Another object may be to provide a display device including a stand for supporting a display panel.

Another object may be to provide a structure for freely adjusting an angle or a height of a display panel.

Another object may be to provide a structure that allows pivoting or swiveling of a display panel.

Another object may be to provide a structure that allows tilting of an arm connected to a display panel.

### TECHNICAL SOLUTION

In accordance with an aspect of the present disclosure for achieving the above and other objects, a display device may include: a head including a display panel; a pole elongated and positioned behind the head; a link extending in a direction intersecting the pole between the head and the pole, and having one end pivotably coupled to the pole; and a gas spring extending in a direction intersecting the link between the head and the link, coupled to the head, and pivotably coupled to the other end of the link.

### EFFECT OF INVENTION

The display device according to the present disclosure has the following effects.

According to at least one of the embodiments of the present disclosure, it is possible to provide a display device including a stand for supporting a display panel.

According to at least one of the embodiments of the present disclosure, it is possible to provide a structure for freely adjusting an angle or a height of a display panel.

According to at least one of the embodiments of the present disclosure, it is possible to provide a structure that allows pivoting or swiveling of a display panel.

According to at least one of the embodiments of the present disclosure, it is possible to provide a structure that allows tilting of an arm connected to a display panel.

Further scope of applicability of the present disclosure will become apparent from the following detailed description. However, it should be understood that the detailed description and specific embodiments such as preferred embodiments of the present disclosure are given by way of example only, since various changes and modifications within the idea and scope of the present disclosure may be clearly understood by those skilled in the art.

### BRIEF DESCRIPTION OF THE DRAWING

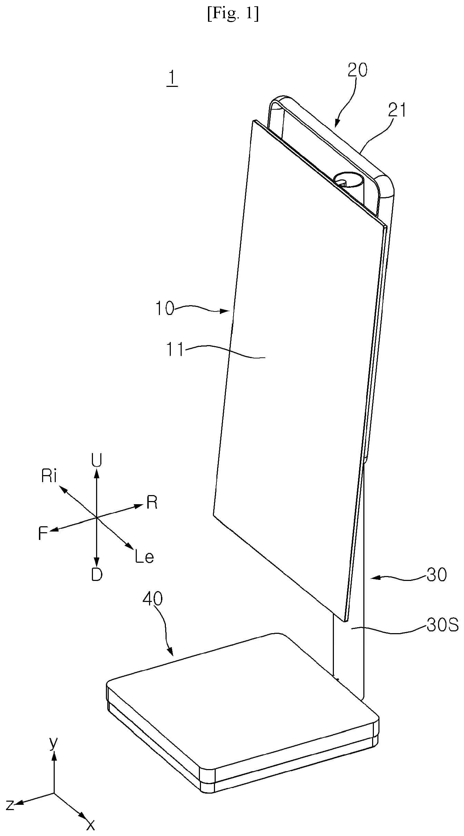

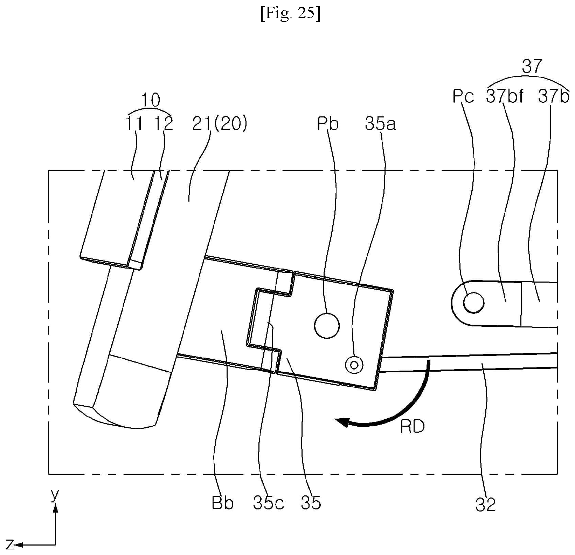

FIGS. 1 to 29 illustrate examples of a display device according to embodiments of the present disclosure.

### MODE FOR CARRYING OUT THE INVENTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In the following description, a suffix such as "module" and "unit" may be used to refer to elements or components. Use of such a suffix herein is merely intended to facilitate description of the specification, and the suffix itself is not intended to give any special meaning or function.

In the present disclosure, that which is well known to one of ordinary skill in the relevant art has generally been omitted for the sake of brevity. The accompanying drawings are used to help easily understand various technical features and it should be understood that the embodiments disclosed herein are not limited by the accompanying drawings. As such, the present disclosure should be construed to extend to any alterations, equivalents, and substitutes in addition to those which are particularly set out in the accompanying drawings.

Although the terms "first", "second", etc. may be used herein to describe various elements, these elements should not be limited by these terms. These terms are only used to distinguish one element from another.

When an element is referred to as being "coupled" or "connected" to another element, intervening elements may also be present. In contrast, when an element is referred to as being "directly coupled" or "directly connected" to another element, there are no intervening elements present.

A singular representation may include a plural representation unless the context clearly indicates otherwise.

Terms such as "comprises or includes" or "has" are used herein and should be understood that they are intended to indicate an existence of features, numbers, steps, operations, elements, components, or combinations thereof, disclosed in the specification, but do not preclude the presence or addition of one or more other features, numbers, steps, operations, elements, components, or combinations thereof.

The directions "up (U, y)", "down (D)", "left (Le, x)", "right (Ri)", "front (F, z)", and "rear (R)" shown in the drawings are provided for convenience of description only, and are not intended to limit the technical scope of the present disclosure.

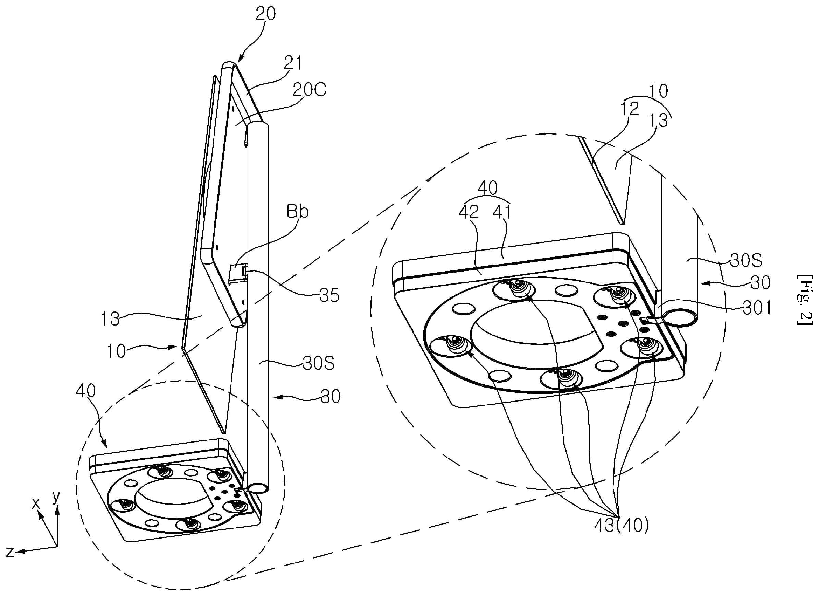

Referring to FIGS. 1 and 2, a display device 1 may include a head 10, a mount 20, a pole 30, and a base 40.

The head 10 may include a display panel 11, a side frame 12, and a back cover 13. The head 10 may be referred to as a display unit 10 or a display 10.

The display panel 11 may form a front surface of the head 10. The display panel 11 may display an image consisting of a plurality of pixels. The display panel 11 may include an active area in which an image is displayed and a de-active area in which no image is displayed. The color, brightness, and chroma of each pixel of the display panel 11 may be adjusted according to a control signal. For example, the display panel 11 may be an LCD panel, an OLED panel, or an LED panel. When the display panel 11 is an LCD panel, the head 10 may include a backlight unit (not shown) for providing light to the display panel 11.

The side frame 12 may extend along a periphery of the display panel 11, and may cover a side surface of the display panel 11. For example, the display panel 11 may be a rectangular panel, and the side frame 12 may be a rectangular frame extending along four sides of the display panel 11.

The back cover 13 may be positioned opposite the display panel 11 with respect to the side frame 12, and may form a rear surface of the head 10. The side frame 12 may be coupled to the display panel 11 and the back cover 13 between the display panel 11 and the back cover 13.

The mount 20 may be positioned at the rear of the head 10, and may be coupled to the head 10. The mount 20 may have a generally thin box shape. The mount 20 may be referred to as a bracket 20, a pivot module 20, or a turn module 20.

The pole 30 may extend from the base 40, which will be described below, toward the head 10, and may be coupled to the mount 20. For example, the pole 30 may be elongated vertically, and may be coupled to the mount 20 at the rear of the mount 20 (see reference numerals Bb and 35).

The base 40 may be spaced apart from the head 10, and may be connected to the head 10 via the pole 30. The base 40 may have a generally flat block shape. Alternatively, the base 40 may have a circular or polygonal box shape. A coupling portion 310 provided at one end of the pole 30 may be coupled to a side surface of the base 40. Alternatively, one end of the pole 30 may be inserted into and coupled to an interior of the base 40. A plurality of wheels 43 may be mounted to a bottom surface of the base 40, and the base 40 may be movable on a surface via the wheels 43. The base 40 may be referred to as a moving base 40.

Accordingly, an assembly of the base 40, the pole 30, and the mount 20 may support the head 10, and the assembly may be referred to as a stand (40, 30, 20).

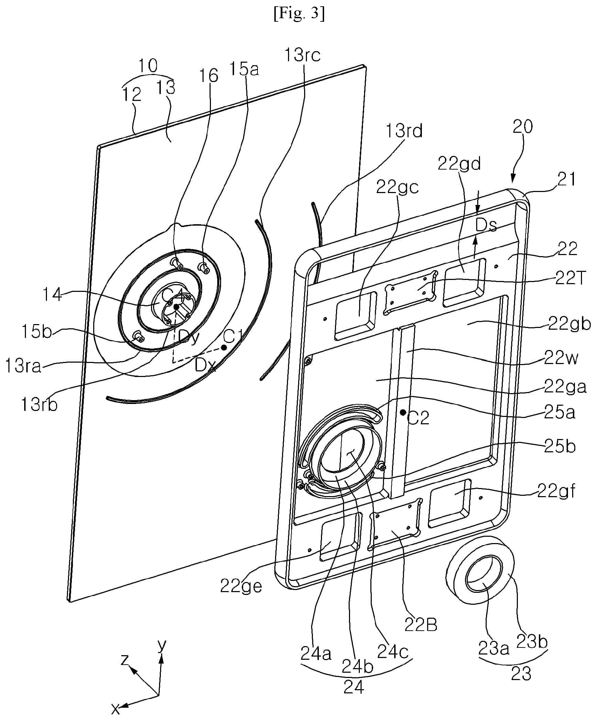

Referring to FIG. 3, an inner ring 14 may protrude rearward from a rear surface of the back cover 13. The inner ring 14 may be formed as one body with the back cover 13 or may be coupled to the back cover 13. The inner ring 14 may have a generally hollow cylindrical shape. A center C4 of the inner ring 14 may be eccentric with respect to a center C1 of the back cover 13. The center C4 of the inner ring 14 may be horizontally spaced apart by a predetermined distance Dx from the center C1 of the back cover 13, and the center C4 of the inner ring 14 may be vertically spaced apart by a predetermined distance Dy from the center C1 of the back cover 13.

A plurality of pins 15a, 15b, and 16 may protrude rearward from the rear surface of the back cover 13. The pins 15a, 15b, and 16 may be formed as one body with the back cover 13 or may be coupled to the back cover 13. For example, the pins 15a, 15b, and 16 may be PEM nuts. The pins 15a, 15b, and 16 may be adjacent to the inner ring 14, and may be spaced apart from each other in a circumferential direction of the inner ring 14. A first guide pin 15a and a second guide pin 15b may be positioned opposite each other with respect to the center C2 of the inner ring 14. A rotating pin 16 may be positioned between the first guide pin 15a and the second guide pin 15b in the circumferential direction of the inner ring 14. The rotating pin 16 may be disposed closer to the first guide pin 15a than to the second guide pin 15b.

The mount 20 may include a frame 21 and a body 22. The body 22 may have a generally rectangular plate shape. The frame 21 may be a rectangular frame extending along four sides of the body 22. For example, a portion of the frame 21 may be spaced upward from an upper side of the body 22 by a predetermined distance Ds. The portion of the frame 21 may be referred to as a handle.

An outer ring 24 may protrude rearward from a rear surface of the body 22. The outer ring 24 may be formed as one body with the body 22 or may be coupled to the body 2. The outer ring 24 may have a generally hollow cylindrical shape. The outer ring 24 and the inner ring 14 may be concentric. That is, a center of the outer ring 24 may be concentric with the center C4 of the inner ring 14, and a diameter of the outer ring 24 may be larger than a diameter of the inner ring 14. The center of the outer ring 24 may be eccentric with respect to a center C2 of the mount 20. The center of the outer ring 24 may be horizontally and vertically spaced apart by a predetermined distance from the center C2 of the mount 20.

The outer ring 24 may include a bottom 24a, a wall 24b, and a hole 24c. The bottom 24a may face the back cover 13, and may be adjacent to or in contact with the rear surface of the back cover 13. The wall 24b may extend along a periphery of the bottom 24a, thereby forming a lateral surface (i.e., a circumferential surface) of the outer ring 24. The hole 24c may be formed through the bottom 24a, and may be aligned with the inner ring 14.

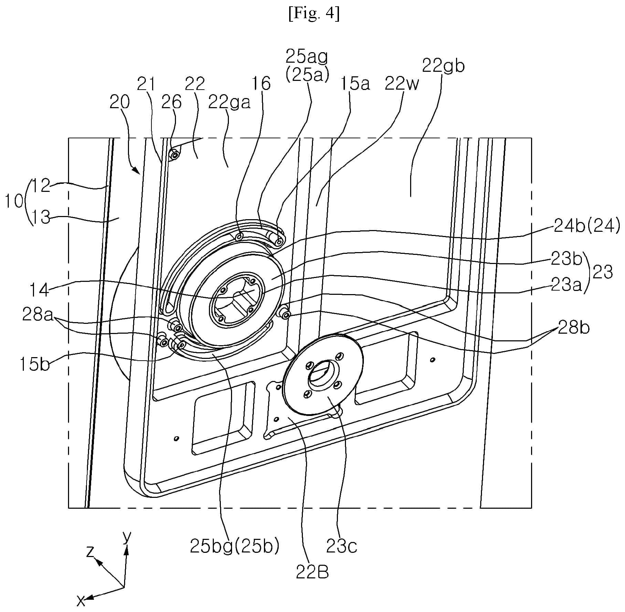

Referring to FIGS. 3 and 4, the inner ring 14 may pass through the hole 24c of the outer ring 24, and a gap may be formed between an outer circumferential surface of the inner ring 14 and an inner circumferential surface of the wall 24b of the outer ring 24. A ringshaped bearing 23 may be inserted into the gap, and may include an inner part 23a in contact with the outer circumferential surface of the inner ring 14 and an outer part 23b in contact with the inner circumferential surface of the wall 24b. For example, the bearing 23 may be a ball bearing or a roller bearing. A cover part 23c may be coupled to the inner ring 14, and may cover at least a portion of a rear surface of the bearing 23. Accordingly, the bearing 23 may support rotation of the inner ring 14 relative to the outer ring 24.

A plurality of slots 25ag and 25bg may be formed in the rear surface of the body 22. For example, the slots 25ag and 25bg may be holes of ribs 25a and 25b formed on the rear surface of the body 22. The slots 25ag and 25bg may be adjacent to the outer ring 24, and may be formed in an arc shape along a circumferential direction of the outer ring 24. A first slot 25ag and a second slot 25bg may be spaced apart from each other in the circumferential direction of the outer ring 24, and may be positioned opposite each other with respect to the center of the outer ring 24.

The first guide pin 15a may be inserted into the first slot 25ag, and may move along the first slot 25ag. The second guide pin 15b may be inserted into the second slot 25bg, and may move along the second slot 25bg. The rotating pin 16 may be inserted into the first slot 25ag, and may move along the first slot 25ag.

A fixed pin 26 may be formed on the rear surface of the body 22. The fixed pin 26 may protrude rearward from the rear surface of the body 22. The fixed pin 26 may be formed as one body with the body 22 or may be coupled to the body 22. For example, the fixed pin 26 may be a PEM nut. The fixed pin 26 may be spaced apart from the rotating pin 16 inserted into the first slot 25ag. A distance between the fixed pin 26 and the rotating pin 16 may vary according to a position of the rotating pin 16 in the first slot 25ag.

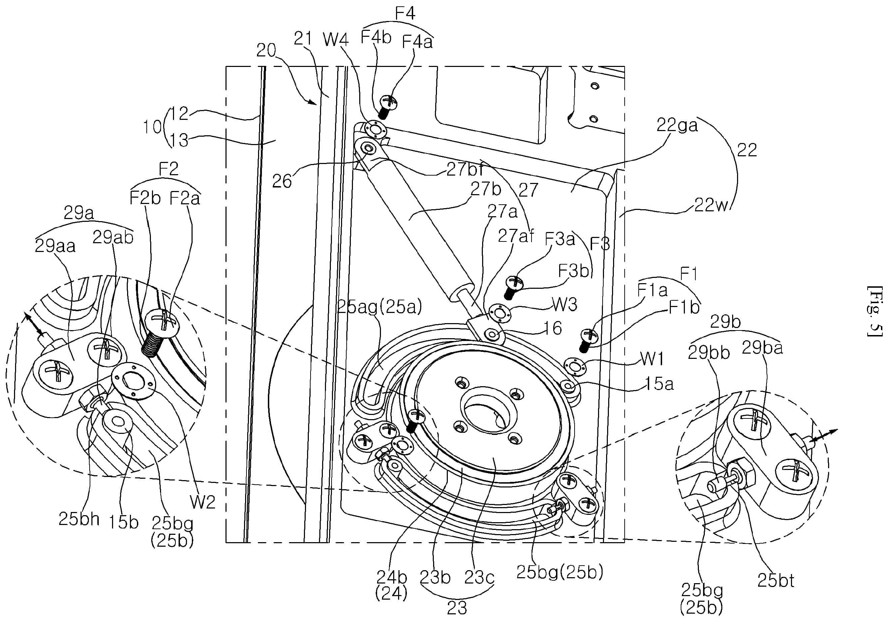

Referring to FIG. 5, a body F1b of a first fastening member F1 may be coupled to the first guide pin 15a, and may be engaged with a rear end of a first rib 25a in which the first slot 25ag is formed. The first fastening member F1 may be a screw having a head F1a, and a first washer W1 penetrated by the body F1b may be disposed between the head F1a and the rear end of the first rib 25a. Accordingly, the first fastening member F1 may prevent the first guide pin 15a, which moves along the first slot 25ag, from being separated from the first slot 25ag.

A body F2b of a second fastening member F2 may be coupled to the second guide pin 15b, and may be engaged with a rear end of a second rib 25b in which the second slot 25bg is formed. The second fastening member F2 may be a screw having a head F2a, and a second washer W2 penetrated by the body F2b may be disposed between the head F2a and the rear end of the second rib 25b. Accordingly, the second fastening member F2 may prevent the second guide pin 15b, which moves along the second slot 25bg, from being separated from the second slot 25bg.

A holder 27 may include a rod 27a and a cylinder 27b. The holder 27 may be a gas spring 27 or a hydraulic spring 27.

The rod 27a may be elongated between the rotating pin 16 and the fixed pin 26. The cylinder 27b may extend in a longitudinal direction of the rod 27a, and may have a larger diameter than the rod 27a. A portion of the rod 27a may be inserted into an interior of the cylinder 27b, and the rod 27a may linearly reciprocate along the cylinder 27b. For example, a gas such as compressed nitrogen may be charged into the cylinder 27b, and a piston (not shown) fixed to one end of the rod 27a may be disposed within the cylinder 27b. The piston may divide an internal space of the cylinder 27b into two spaces, and the two spaces may communicate with each other through an orifice formed in the piston. In this case, an area of a first surface of the piston to which one end of the rod 27a is fixed may be smaller than an area of a second surface of the piston opposite the first surface. Accordingly, depending on the flow of gas passing through the orifice, the rod 27a may move in a direction in which the rod 27a is inserted into the interior of the cylinder 27b or in a direction opposite thereto.

A first end fitting 27af may protrude from an end of the rod 27a. The rotating pin 16 may pass through the first end fitting 27af, and the first end fitting 27af may be rotatable about the rotating pin 16. A second end fitting 27bf may protrude from an end of the cylinder 27b. The fixed pin 26 may pass through the second end fitting 27bf, and the second end fitting 27bf may be rotatable about the fixed pin 26.

A body F3b of a third fastening member F3 may be coupled to the rotating pin 16, and may be engaged with a rear surface of the first end fitting 27af. The third fastening member F3 may be a screw having a head F3a, and a third washer W3 penetrated by the body F3b may be disposed between the head F3a and the rear surface of the first end fitting 27af. Accordingly, the third fastening member F3 may prevent the rotating pin 16, which moves along the first slot 25ag, from being separated from the first slot 25ag. In addition, the third fastening member F3 may prevent the first end fitting 27af, which rotates about the rotating pin 16, from being separated from the rotating pin 16.

A body F4b of a fourth fastening member F4 may be coupled to the fixed pin 26, and may be engaged with a rear surface of the second end fitting 27bf. The fourth fastening member F4 may be a screw having a head F4a, and a fourth washer W4 penetrated by the body F4b may be disposed between the head F4a and the rear surface of the second end fitting 27bf. Accordingly, the fourth fastening member F4 may prevent the second end fitting 27bf, which rotates about the fixed pin 26, from being separated from the fixed pin 26.

A first damper 29a may be mounted to the rear surface of the body 22 at a position adjacent to one end (or a first end) of the second slot 25bg. The first damper 29a may include a first damper box 29aa and a first damping pin 29ab. For example, a fastening member such as a screw may pass through the first damper box 29aa and be fastened to a first fixing portion 28a (see FIG. 4) of the body 22. The first damping pin 29ab may protrude from the first damper box 29aa toward the first end of the second slot 25bg. The first damping pin 29ab may be connected to an elastic member, such as a spring, accommodated in the first damper box 29aa.

Accordingly, the first damping pin 29ab may move into the first damper box 29aa by an external force applied to the first damping pin 29ab, thereby elastically deforming the elastic member (e.g., compressing the elastic member). When the external force applied to the first damping pin 29ab is released, the first damping pin 29ab may move again from the first damper box 29aa toward the first end of the second slot 25bg by a restoring force of the elastic member. A first hole 25bh may be formed at one end of the second rib 25b in which the second slot 25bg is formed, and the first damping pin 29ab may pass through the first hole 25bh.

A second damper 29b may be mounted to the rear surface of the body 22 at a position adjacent to the other end (or a second end) of the second slot 25bg. The second damper 29b may include a second damper box 29ba and a second damping pin 29bb. For example, a fastening member such as a screw may pass through the second damper box 29ba and be fastened to a second fixing portion 28b (see FIG. 4) of the body 22. The second damping pin 29bb may protrude from the second damper box 29ba toward the second end of the second slot 25bg. The second damping pin 29bb may be connected to an elastic member, such as a spring, accommodated in the second damper box 29ba.

Accordingly, the second damping pin 29bb may move into the second damper box 29ba by an external force applied to the second damping pin 29bb, thereby elastically deforming the elastic member (e.g., compressing the elastic member). When the external force applied to the second damping pin 29bb is released, the second damping pin 29bb may move again from the second damper box 29ba toward the second end of the second slot 25bg by a restoring force of the elastic member. A second hole 25bt may be formed at the other end of the second rib 25b in which the second slot 25bg is formed, and the second damping pin 29bb may pass through the second hole 25bt.

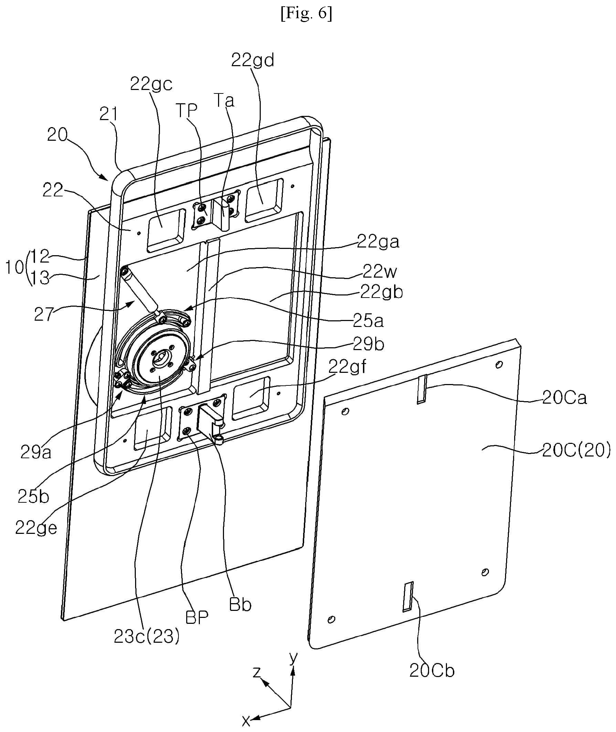

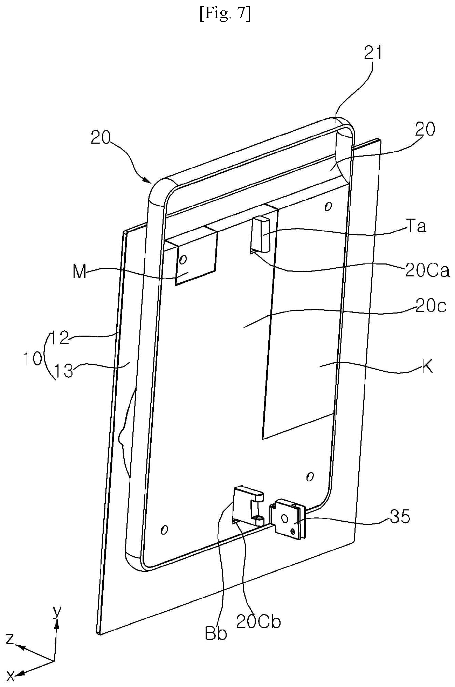

Referring to FIGS. 6 and 7, a mount cover 20C may cover the rear of the body 22 of the mount 20, and may be detachably coupled to the body 22. An upper plate TP may be fixed to an upper groove 22T (see FIG. 3) of the body 22. A tab Ta may protrude rearward from the upper plate TP, and may pass through an upper hole 20Ca of the mount cover 20C. A lower plate BP may be fixed to a lower groove 22B (see FIG. 3) of the body 22. A bracket Bb may protrude rearward from the lower plate BP, and may pass through a lower hole 20Cb of the mount cover 20C.

A plurality of recessed portions 22ga, 22gb, 22gc, 22gd, 22ge, and 22gf may be formed in the rear surface of the body 22. A partition wall 22w may extend along a vertical line passing through a center of the body 22, and may be positioned between a first recessed portion 22ga and a second recessed portion 22gb. The aforementioned dampers 29a and 29b, the holder 27, and the like may be mounted in the first recessed portion 22ga. A main board and a power supply board for the operation of the head 10 may be mounted in at least some of the recessed portions 22gb, 22gc, 22gd, 22ge, and 22gf.

Meanwhile, an electronic device(s) such as a keyboard K and/or a mouse M may be detachably mounted to the mount cover 20C. The keyboard K and/or the mouse M may form a portion of the mount cover 20C.

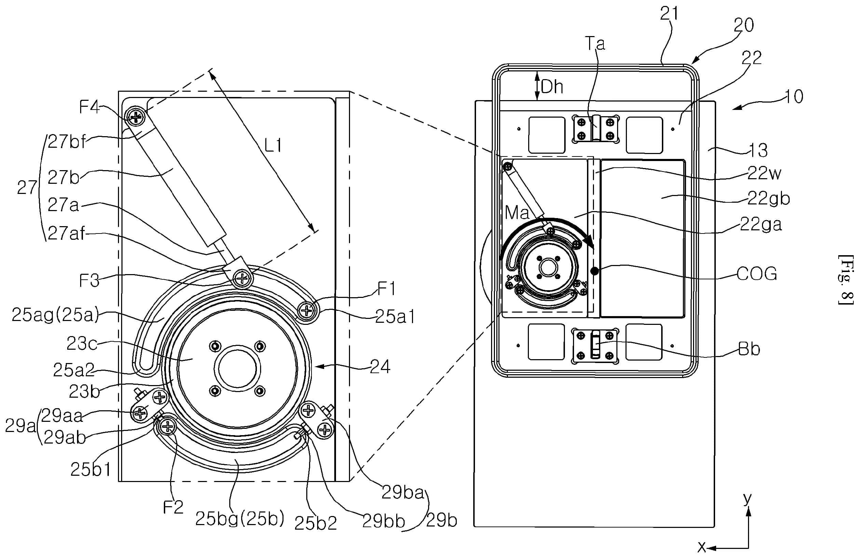

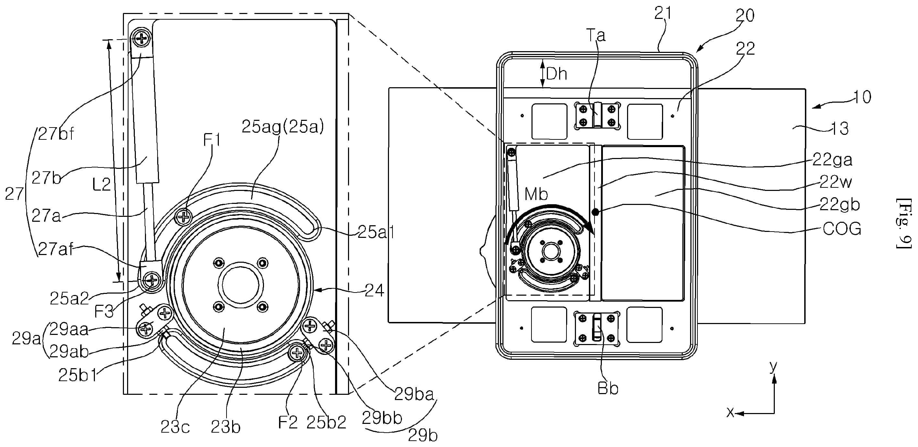

Referring to FIGS. 8 and 9, the head 10 may be rotatable about the outer ring 24 of the mount 20 as a center (hereinafter referred to as a "rotation center of the head 10"). The holder 27 coupled to the mount 20 may support a load of the head 10.

Referring to FIG. 8, in a portrait mode in which long sides of the head 10 are parallel to a vertical direction, the first guide pin 15a (see FIG. 5) to which the first fastening member F1 is fixed may contact a first end 25a1 of the first rib 25a. In the portrait mode, the second guide pin 15b (see FIG. 5) to which the second fastening member F2 is fixed may press the first damping pin 29ab while being adjacent to a first end 25b1 of the second rib 25b. In the portrait mode, the rotating pin 16 (see FIG. 5) to which the third fastening member F3 is fixed may be positioned closer to the first end 25a1 than to a second end 25a2 of the first rib 25a.

In this case, a center of gravity COG of the head 10 may be eccentric with respect to the rotation center of the head 10 (i.e., the center of the outer ring 24). The center of gravity COG of the head 10 may be spaced rightward from the rotation center of the head 10, and as a result, a moment corresponding to a product of a horizontal distance between the center of gravity COG and the rotation center and the load of the head 10 may be applied to the head 10. However, rotation of the head 10 due to the moment (see Ma in FIG. 8) may be restricted by contact between the first guide pin 15a (see FIG. 5) and the first end 25a1. Accordingly, the portrait mode of the head 10 may be maintained.

Referring to FIG. 9, in a landscape mode in which the long sides of the head 10 are parallel to a horizontal direction, the first guide pin 15a (see FIG. 5) to which the first fastening member F1 is fixed may be positioned closer to the second end 25a2 than to the first end 25a1 of the first rib 25a. In the landscape mode, the second guide pin 15b (see FIG. 5) to which the second fastening member F2 is fixed may press the second damping pin 29bb while being adjacent to a second end 25b2 of the second rib 25b. In the landscape mode, the rotating pin 16 (see FIG. 5) to which the third fastening member F3 is fixed may be adjacent to or in contact with the second end 25a2 of the first rib 25a.

In this case, a center of gravity COG of the head 10 may be eccentric with respect to the rotation center of the head 10 (i.e., the center of the outer ring 24). The center of gravity COG of the head 10 may be spaced rightward from the rotation center of the head 10, and as a result, a moment corresponding to a product of a horizontal distance between the center of gravity COG and the rotation center and the load of the head 10 may be applied to the head 10. However, rotation of the head 10 due to the moment (see Mb in FIG. 9) may be restricted by a pushing force exerted by the rod 27a of the holder 27. Accordingly, the landscape mode of the head 10 may be maintained.

In addition, a length L2 of the holder 27 in the landscape mode (see FIG. 9) may be greater than a length L1 of the holder 27 in the portrait mode (see FIG. 8). A minimum length of the holder 27 may be defined in a mode between the landscape mode and the portrait mode. That is, when the rotating pin 16 (see FIG. 5) is located at any point between a position of the rotating pin 16 in the portrait mode (see FIG. 8) and a position of the rotating pin 16 in the landscape mode (see FIG. 9), the holder 27 connected to the rotating pin 16 may have the minimum length.

Meanwhile, when the portrait mode is switched to the landscape mode, the center of gravity COG of the head 10 may move upward with respect to the rotation center of the head 10. According to the positional relationship between the rotation center and the center of gravity COG, a gap Dh (see FIG. 8) between the head 10 and a portion of the frame 21 in the portrait mode may be equal to a gap Dh (see FIG. 9) between the head 10 and the portion of the frame 21 in the landscape mode.

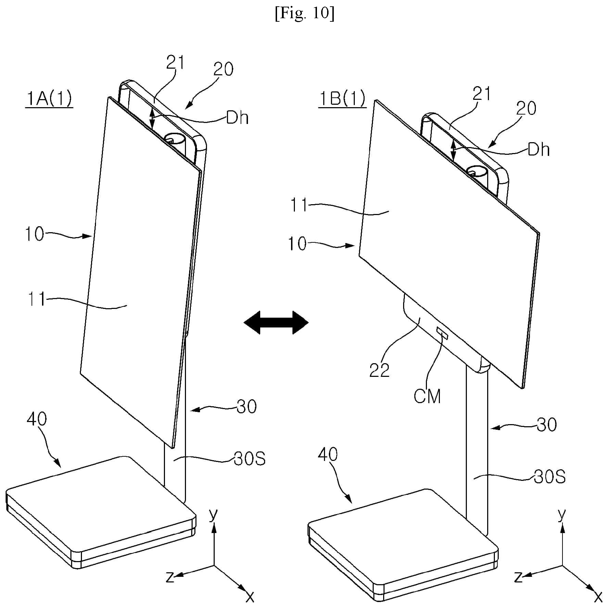

Referring to FIG. 10, a user may rotate the head 10 clockwise by 90 degrees to switch from a portrait mode (1A) to a landscape mode (1B). The second damping pin 29bb of the second damper 29b may mitigate an impact caused by switching from the portrait mode (1A) to the landscape mode (1B) (see FIG. 9).

A user may rotate the head 10 counterclockwise by 90 degrees to switch from the landscape mode (1B) to the portrait mode (1A). The first damping pin 29ab of the first damper 29a may mitigate an impact caused by switching from the landscape mode (1B) to the portrait mode (1A) (see FIG. 8).

The action of a user rotating the head 10 to the landscape mode (1B) or the portrait mode (1A) may be referred to as pivoting.

For example, an electronic component CM such as a camera or speaker may be mounted to a front surface of the body 22 at a position adjacent to a lower side of the body 22 of the mount 20. In this case, the electronic component CM may be hidden by the head 10 in the portrait mode (1A) and exposed to the outside in the landscape mode (1B).

As another example, an electronic component CM such as a camera or speaker may be disposed in the gap Dh between the head 10 and a portion of the frame 21 of the mount 20. As described above, the gap Dh may be maintained constant in the portrait mode (1A) and the landscape mode (1B), and the electronic component CM may be equally exposed to the outside in both the portrait mode (1A) and the landscape mode (1B).

Meanwhile, a plurality of ribs 13ra, 13rb, 13rc, and 13rd (see FIG. 3) may be formed on the rear surface of the back cover 13 of the head 10, and may contact the front surface of the body 22 of the mount 20. Circular ribs 13ra and 13rb may extend around the inner ring 14 along the circumferential direction of the inner ring 14. Arcuate ribs 13rc and 13rd may extend around the circular ribs 13ra and 13rb along the circular ribs 13ra and 13rb. Accordingly, rotational friction between the head 10 and the mount 20 may be minimized.

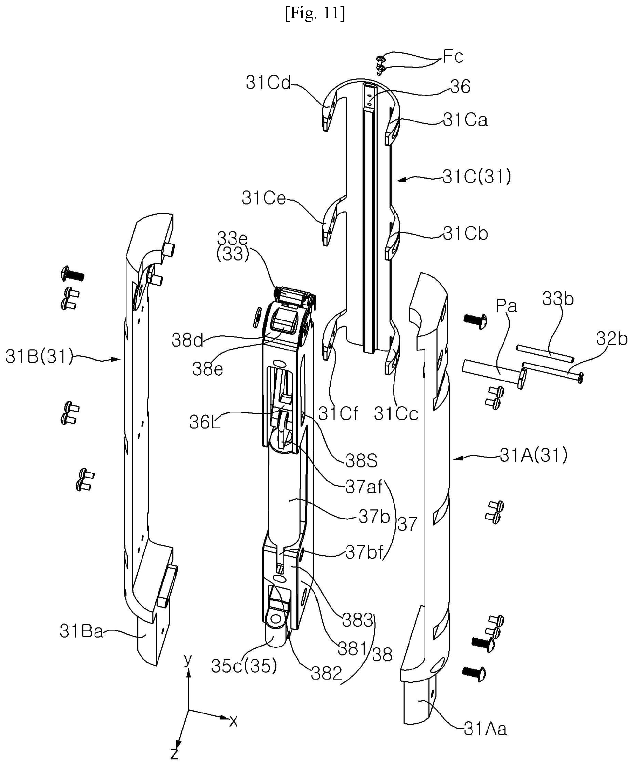

Referring to FIG. 11, a lift assembly (33, 35, 37, 38, etc.) may be mounted within an inner sleeve 31. The inner sleeve 31 may be referred to as an inner frame 31.

The inner sleeve 31 may be elongated vertically. The inner sleeve 31 may include a first inner sleeve 31A, a second inner sleeve 31B, and a third inner sleeve 31C. The lift assembly (33, 35, 37, 38, etc.) may be coupled to the first and second inner sleeves 31A and 31B between the first and second inner sleeves 31A and 31B. The third inner sleeve 31C may cover the rear of the lift assembly (33, 35, 37, 38, etc.), and may be coupled to the first and second inner sleeves 31A and 31B.

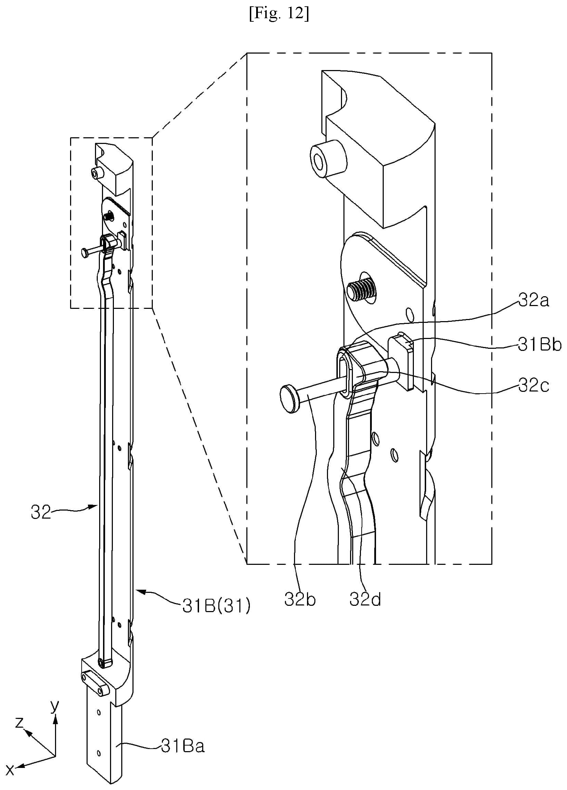

Referring to FIG. 12, a lower arm 32 may be elongated along the inner sleeve 31. The lower arm 32 may be referred to as a nod arm 32.

A slot 32a may be formed adjacent to one end of the lower arm 32, and may be an elongated hole extending in a longitudinal direction of the lower arm 32. A first lower pin 32b may pass through the first inner sleeve 31A (see FIG. 11) and the slot 32a and be coupled to the second inner sleeve 31B. A diameter of the first lower pin 32b may be less than a length (width) of the slot 32a. The lower arm 32 may be rotatable about the first lower pin 32b.

A protrusion 32c may be adjacent to the slot 32a, and may protrude from the lower arm 32. The protrusion 32c may be a portion of the lower arm 32. The protrusion 32c may be referred to as a lobe 32c.

A bent portion 32d may be formed in such a manner that a portion of the lower arm 32 is bent. A bending direction of the bent portion 32d may be opposite to a protruding direction of the protrusion 32c.

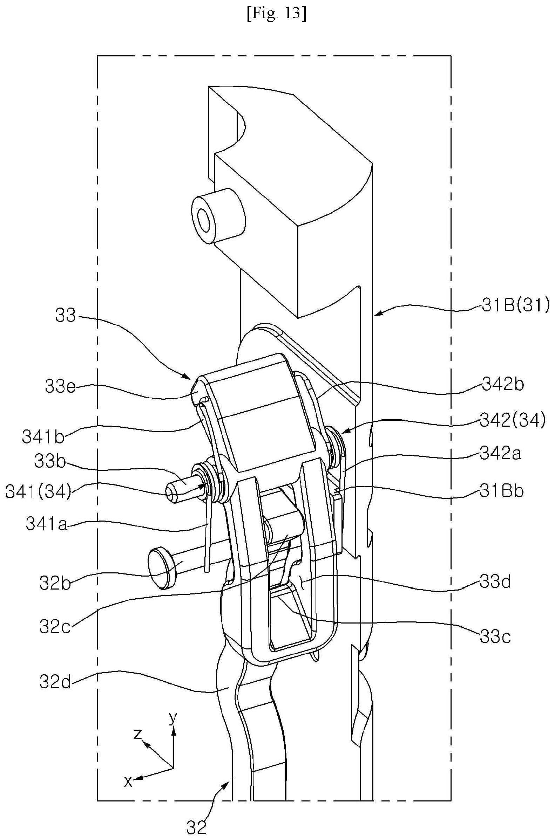

Referring to FIG. 13, a locker 33 may be adjacent to one end of the lower arm 32. A locker pin 33b may pass through the first inner sleeve 31A (see FIG. 11) and the locker 33 and be coupled to the second inner sleeve 31B. The locker 33 may be rotatable about the locker pin 33b.

A hole 33d may be formed through the locker 33, and the protrusion 32c of the lower arm 32 may be inserted into the hole 33d. A contact portion 33c may define a portion of a boundary of the hole 33d. As the lower arm 32 rotates, the protrusion 32c may move within the hole 33d in a direction toward or away from the contact portion 33c.

A hook 33e may protrude from one end of the locker 33, and the contact portion 33c may be formed adjacent to the other end of the locker 33.

An elastic member 34 may be disposed adjacent to the locker 33 and wound around an outer circumference of the locker pin 33b. The elastic member 34 may be a torsion spring. A portion (341a, 342a) of the elastic member 34 may be fixed to the inner sleeve 31, and another portion (341b, 342b) of the elastic member 34 may be fixed to the locker 33. A first elastic member 341 may be positioned between the locker 33 and the first inner sleeve 31A (see FIG. 11). A portion 341a of the first elastic member 341 may be supported by a support portion (not shown) of the first inner sleeve 31A, and another portion 341b of the first elastic member 341 may be fixed to a left surface of the locker 33 at a position adjacent to the hook 33e. A second elastic member 342 may be positioned between the locker 33 and the second inner sleeve 31B. A portion 342a of the second elastic member 342 may be supported by a support portion 31Bb of the second inner sleeve 31B, and another portion 342b of the second elastic member 342 may be fixed to a right surface of the locker 33 at a position adjacent to the hook 33e.

Accordingly, the elastic member 34 may be elastically deformed when the locker 33 rotates clockwise about the locker pin 33b. A restoring force of the elastic member 34 may cause the locker 33 to rotate counterclockwise about the locker pin 33b.

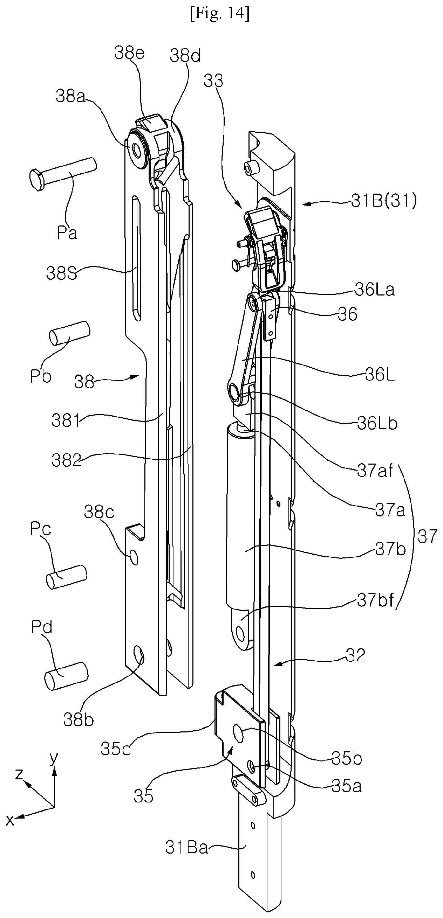

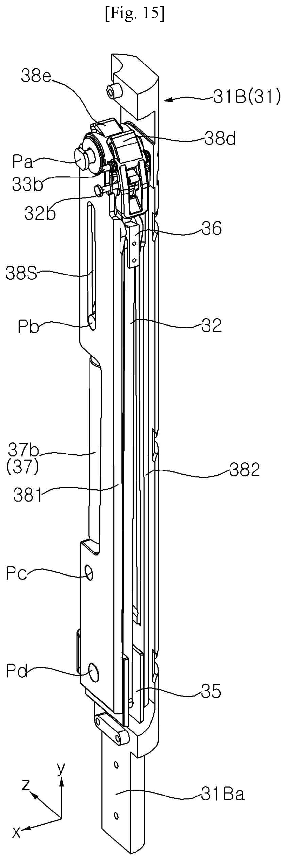

Referring to FIGS. 14 and 15, a joint 35 may be positioned opposite the locker 33 with respect to the lower arm 32. The locker 33 may be adjacent to one end (or a first end) of the lower arm 32, and the joint 35 may be adjacent to the other end (or a second end) of the lower arm 32. A second lower pin 35a may pass through the joint 35 and the second end of the lower arm 32. The joint 35 may be rotatably coupled to the second end of the lower arm 32 about the second lower pin 35a.

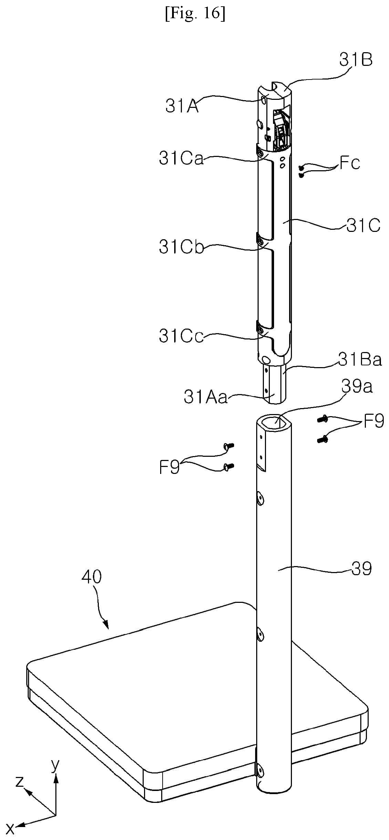

A fixer 36 may be positioned below the locker 33, and may be fixed to an inner surface of the third inner sleeve 31C with a fastening member Fc such as a screw (see FIG. 16).

A link 36L may extend in a direction intersecting the lower arm 32. One end (or a first end) 36La of the link 36L may be rotatably coupled to the fixer 36 about an axis perpendicular to the link 36L (i.e., an axis extending in the left-right direction).

A holder 37 may extend in a direction intersecting the link 36L. The holder 37 may include a rod 37a and a cylinder 37b. The holder 37 may be a gas spring 37 or a hydraulic spring 37.

The rod 37a and the cylinder 37b may extend in a longitudinal direction of the holder 37. The cylinder 37b may have a larger diameter than the rod 37a. A portion of the rod 37a may be inserted into an interior of the cylinder 37b, and the rod 37a may linearly reciprocate along the cylinder 37b. For example, a gas such as compressed nitrogen may be charged into the cylinder 37b, and a piston (not shown) fixed to one end of the rod 37a may be disposed within the cylinder 37b. The piston may divide an internal space of the cylinder 37b into two spaces, and the two spaces may communicate with each other through an orifice formed in the piston. In this case, an area of a first surface of the piston to which one end of the rod 37a is fixed may be smaller than an area of a second surface of the piston opposite the first surface. Accordingly, depending on the flow of gas passing through the orifice, the rod 37a may move in a direction in which the rod 37a is inserted into the interior of the cylinder 37b or in a direction opposite thereto.

A first end fitting 37af may protrude from an end of the rod 37a. A first shaft Pb may pass through the other end (or a second end) 36Lb of the link 36L and the first end fitting 37af, and may connect the link 36L and the first end fitting 37af. The holder 37 may be rotatably coupled to the second end 37Lb of the link 36L about the first shaft Pb. A second end fitting 37bf may protrude from an end of the cylinder 37b.

An upper arm 38 may be positioned opposite the lower arm 32. The link 36L and the holder 37 may be disposed between the upper arm 38 and the lower arm 32. The upper arm 38 may include a first part 381, a second part 382, and a third part 383 (see FIG. 11). The first and second parts 381 and 382 may be elongated along the inner sleeve 31, and may be positioned opposite each other with respect to the link 36L and the holder 37. The third part 383 (see FIG. 11) may connect the first and second parts 381 and 382.

A first upper pin Pa may pass through the first inner sleeve 31A (see FIG. 11) and an upper hole 38a of the upper arm 38be and be coupled to the second inner sleeve 31B. The upper arm 38 may be rotatable about the first upper pin Pa.

A second upper pin Pd may pass through a lower hole 38b of the upper arm 38 and a hole 35b of the joint 35, and may connect the upper arm 38 and the joint 35. The upper arm 38 may be rotatably coupled to the joint 35 about the second upper pin Pd.

A slot 38S may be formed in each of the first and second parts 381 and 382, and the first shaft Pb may be movably inserted into the slot 38S. A second shaft Pc may pass through a hole 38c of the first and second parts 381 and 382 and the second end fitting 37bf, and may connect the upper arm 38 and the second end fitting 37bf. The holder 37 may be rotatably coupled to the upper arm 38 about the second shaft Pc.

Meanwhile, a middle part 35c of the joint 35 may be coupled to the bracket Bb of the mount 20 coupled to the head 10 (see FIG. 7).

Referring to FIG. 16, a stem 39 may extend vertically from the base 40. A portion 31Aa of the first inner sleeve 31A and a portion 31Ba of the second inner sleeve 31B may be inserted into a hole 39a of the stem 39, and may be coupled to the stem 39 by a screw F9. An outer sleeve 30S (see FIG. 2) of the pole 30 may surround the stem 39 and the first to third inner sleeves 31A, 31B, and 31C, and may form an outer surface of the pole 30.

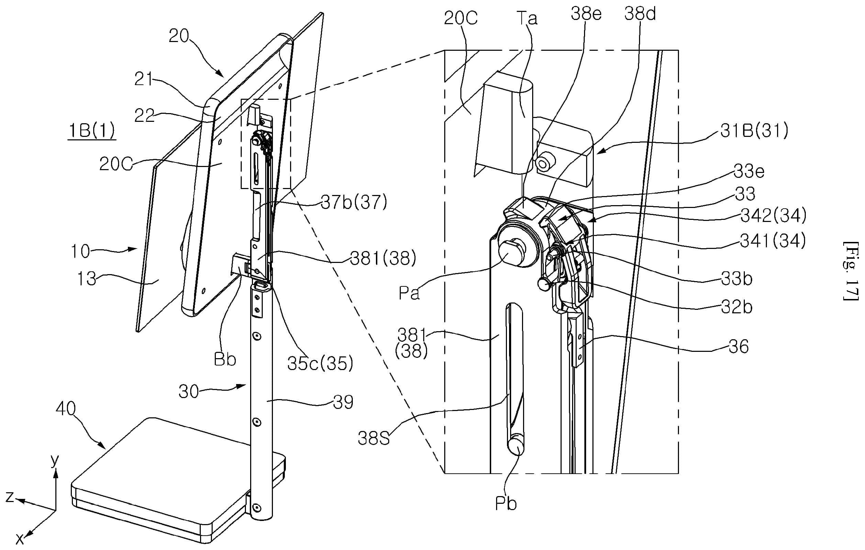

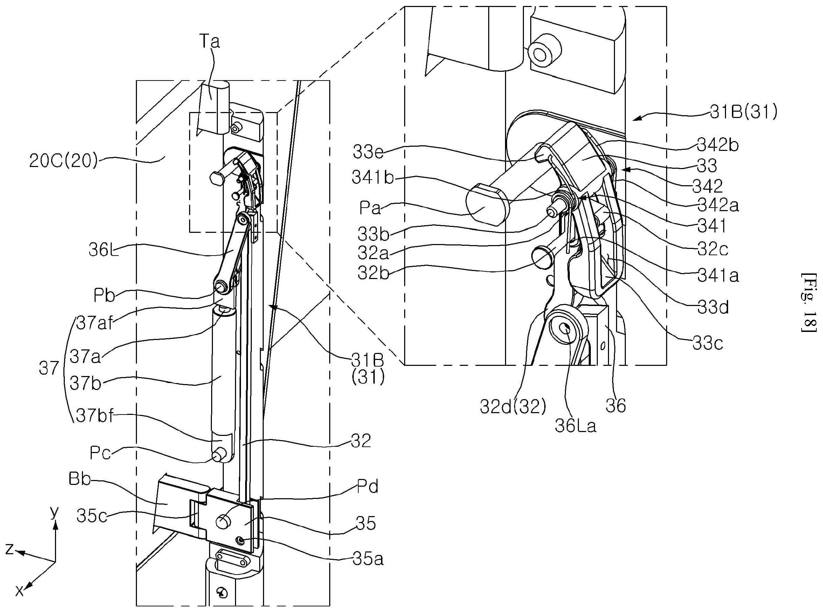

Referring to FIGS. 17 and 18, in a low position mode (1B) of the display device 1, the link 36L and the holder 37 may be positioned inside the inner sleeve 31 of the pole 30. The first shaft Pb connecting the link 36L and the holder 37 may be adjacent to or in contact with a first end of the slot 38S of the upper arm 38. A length of the holder 37 in the low position mode (1B) may be a minimum length of the holder 37. The arms 32 and 38 coupled to the pole 30 and the joint 5 may support the head 10 and the mount 20.

Further, in the low position mode (1B), the hook 33e of the locker 33 may be adjacent to or in contact with an outer surface of a cam 38d of the upper arm 38. Here, the cam 38d may be a portion of the upper arm 38 through which the first upper pin Pa passes, and may include a protrusion 38e. The protrusion 38e may be referred to as a cam lobe 38e, and a portion of the cam 38d excluding the protrusion 38e may be referred to as a cam heel.

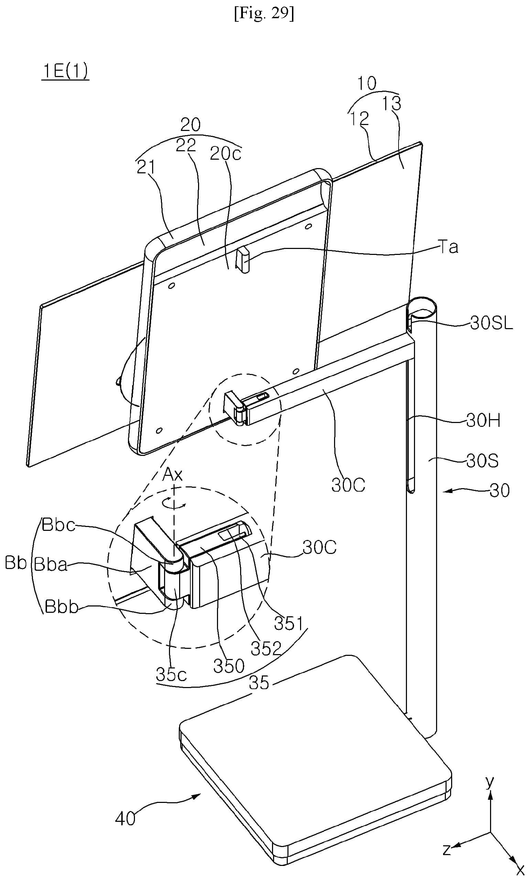

Meanwhile, in the low position mode (1B), the tab Ta of the mount 20 may be inserted into a groove 30SL (see FIG. 29) formed at an upper end of the outer sleeve 30S, and a groove formed at an upper end of the inner sleeve 31. For example, the tab Ta may have a magnet that is magnetically coupled to the inner sleeve 31 made of a metal material.

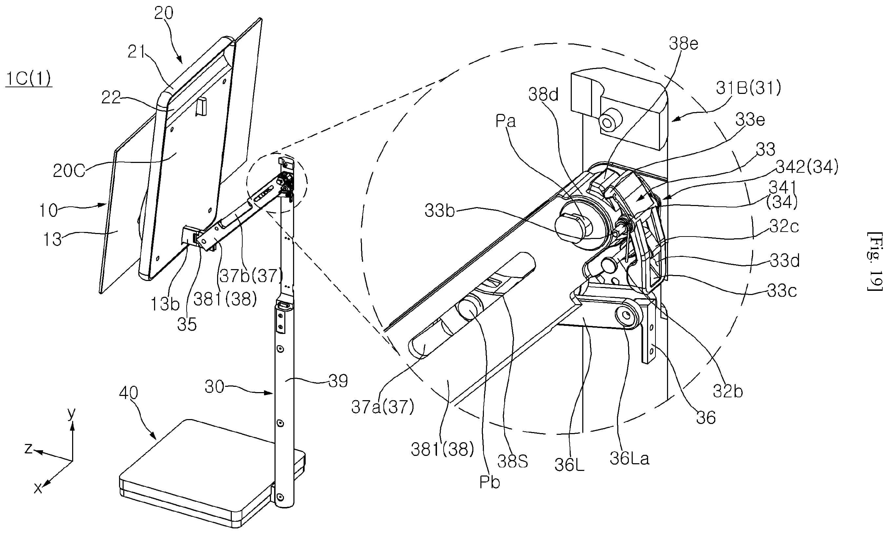

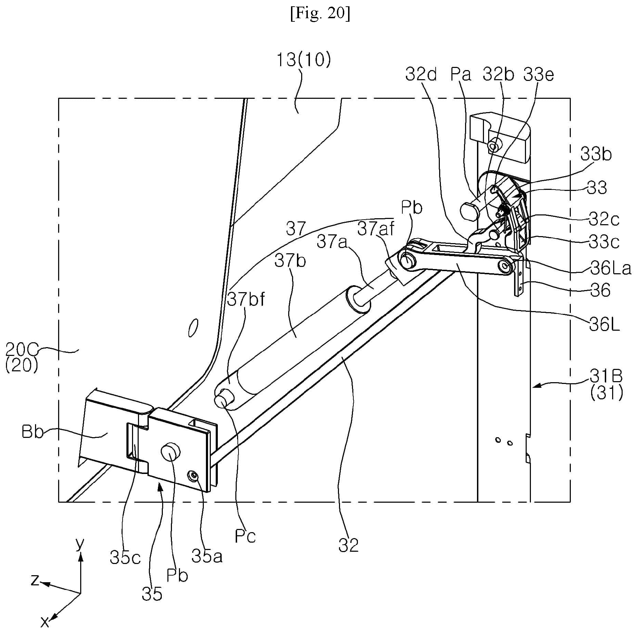

Referring to FIGS. 19 and 20, in a mid position mode (1C) of the display device 1, the link 36L may be tilted at a predetermined angle (a right angle or an acute angle) with respect to the inner sleeve 31, and the first shaft Pb connecting the link 36L and the holder 37 may be positioned between the first end and a second end of the slot 38S of the upper arm 38. In response to the tilting of the link 36L, the rod 37a of the holder 37 may move in a direction away from the cylinder 37b, and an angle between the rod 37a and the link 36L may decrease.

At this time, a moment corresponding to a load of the head 10 may be applied to the head 10. However, at least a portion of the moment that tends to rotate the head 10 and the upper arm 38 may be counteracted by a pushing force of the holder 37 supported by the link 36L.

Accordingly, a force required for a user to switch from the low position mode (1B) (see FIGS. 17 and 18) to the mid position mode (1C) may be minimized.

Further, in the mid position mode (1C), the hook 33e of the locker 33 may be adjacent to or in contact with the outer surface of the cam 38d of the upper arm 38. Specifically, during switching from the low position mode (1B) (see FIGS. 17 and 18) to the mid position mode (1C), the hook 33e may move along the outer surface of the cam 38d, and may approach the protrusion 38e of the cam 38d. For example, the hook 33e may contact the protrusion 38e when an angle between the upper arm 38 and the inner sleeve 31 is 40 degrees or more.

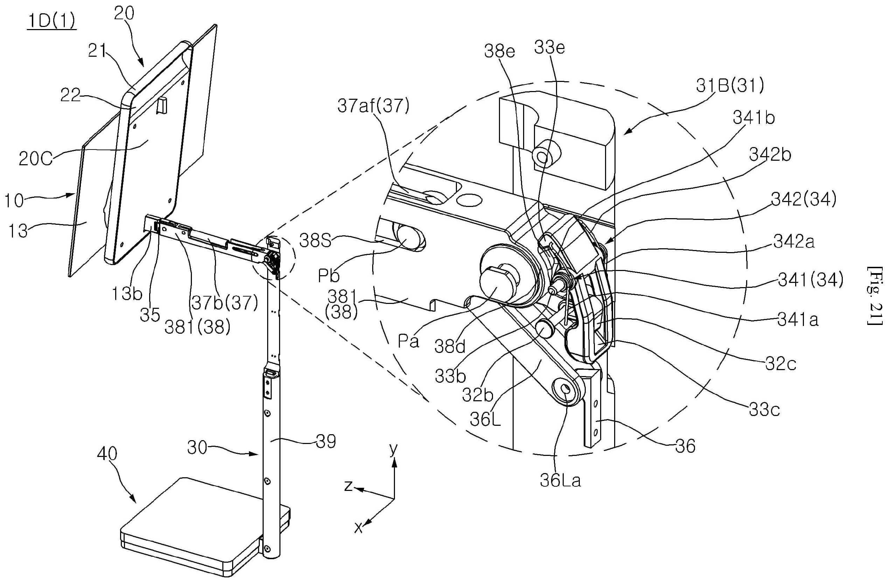

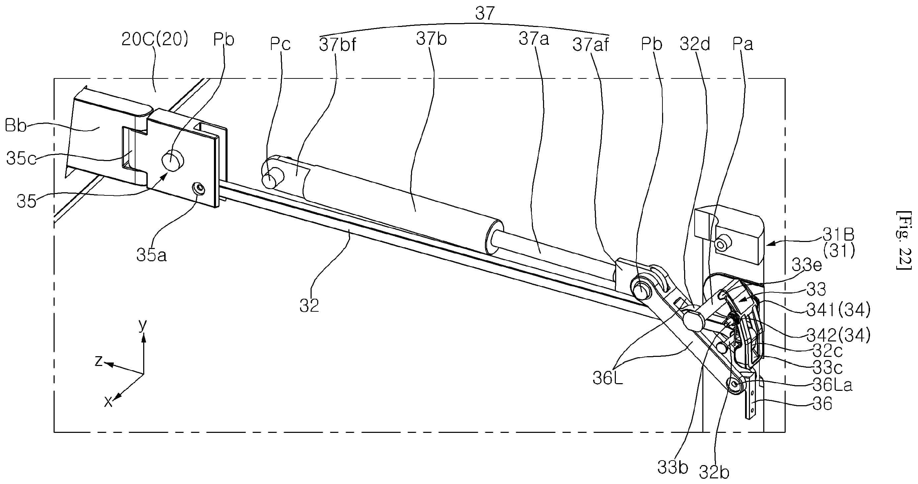

Referring to FIGS. 21 and 22, in a high position mode (1D) of the display device 1, the link 36L may be tilted at a predetermined angle (a right angle or an obtuse angle) with respect to the inner sleeve 31, and the first shaft Pb connecting the link 36L and the holder 37 may be adjacent to or in contact with the second end of the slot 38S of the upper arm 38. In response to the tilting of the link 36L, the rod 37a of the holder 37 may move in a direction away from the cylinder 37b, and an angle between the rod 37a and the link 36L may decrease. A length of the holder 37 in the high position mode (1D) may be a maximum length of the holder 37.

At this time, a moment corresponding to a load of the head 10 may be applied to the head 10. A horizontal distance between a center of gravity of the head 10 and the pole 30 in the high position mode (1D) may be greater than a horizontal distance between a center of gravity of the head 10 and the pole 30 in the mid position mode (1C) (see FIGS. 19 and 20). That is, the moment in the high position mode (1D) may be greater than the moment in the mid position mode (1C) (see FIG. 19 and 20). However, at least a portion of the moment that tends to rotate the head 10 and the upper arm 38 may be counteracted by a pushing force of the holder 37 supported by the link 36L.

Accordingly, a force required for a user to switch from the mid position mode (1C) (see FIGS. 19 and 20) to the high position mode (1D) may be minimized.

Further, in the high position mode (1D), the hook 33e of the locker 33 may be engaged with the protrusion 38e of the cam 38d of the upper arm 38. Specifically, during switching from the mid position mode (1C) (see FIGS. 19 and 20) to the high position mode (1D), the hook 33e may move along an outer surface of the protrusion 38e, and in response thereto, the locker 33 may be rotated clockwise about the locker pin 33b. Then, when the hook 33e passes beyond the outer surface of the protrusion 38e, the locker 33 may be rotated counterclockwise by a restoring force of the elastic member 34, and the hook 33e may be engaged with the protrusion 38e.

Accordingly, the locker 33 may restrict rotation of the upper arm 38. That is, the high position mode (1D) may be maintained by the locker 33 even when a user releases the head 10.

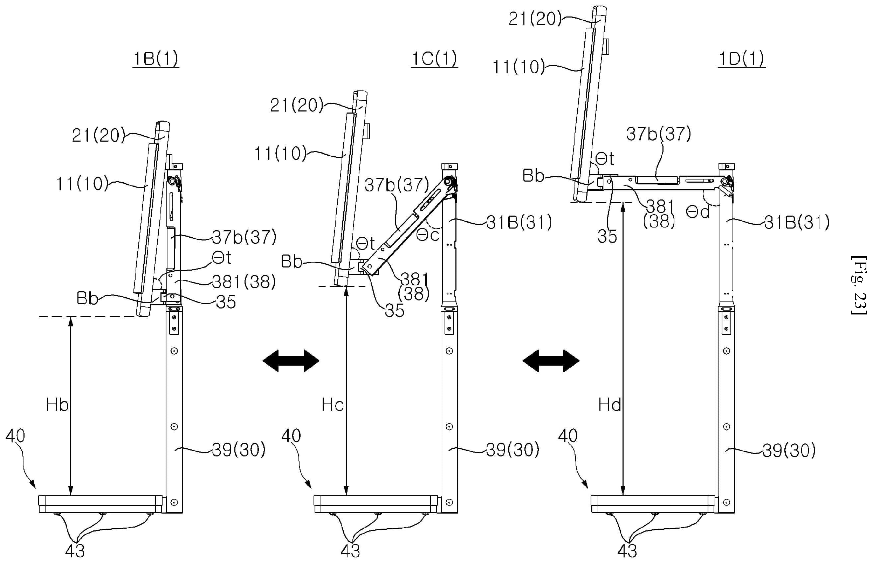

Referring to FIG. 23, in the low position mode (1B), the upper arm 38 may be disposed aligned with the pole 30, and the mount 20 to which the head 10 is coupled may be spaced upward from the base 40 by a predetermined distance Hb. The low position mode (1B) may be referred to as a default mode (1B).

In addition, an angle between the holder 37 and the link 36L in the low position mode (1B) (see FIG. 18) may be greater than an angle between the holder 37 and the link 36L in the other modes (1C and 1D) (see FIG. 20 and FIG. 22). In this case, it may be advantageous to accommodate the holder 37 inside the pole 30 in the low position mode (1B) compared to a case in which the link 36L is omitted and the holder 37 is directly coupled to the fixer 36.

In the mid position mode (1C), the upper arm 38 may be inclined from the pole 30 by a first angle (θc), and a distance Hc between the mount 20 to which the head 10 is coupled and the base 40 may be greater than the distance Hb. The first angle (θ) may be an acute angle.

In addition, the upper arm 38 may pass through a hole 30H (see FIG. 29) of the outer sleeve 30S of the pole 30. Meanwhile, an arm cover 30C (see FIG. 29) may cover the upper arm 38.

In the high position mode (1D), the upper arm 38 may be inclined from the pole 30 by a second angle (θd) greater than the first angle (θc), and a distance Hd between the mount 20 to which the head 10 is coupled and the base 40 may be greater than the distance Hc. The second angle (θ) may be about 90 degrees. The high position mode (1D) may be referred to as a lift mode (1D).

That is, as the angle between the pole 30 and the upper arm 38 increases, the height of the head 10 may increase. In addition, as the angle between the pole 30 and the upper arm 38 increases, the head 10 may be positioned farther away from the pole 30.

The action of a user lifting the head 10 upward while pulling the head 10 forward or lowering the head 10 downward while pushing the head 10 rearward may be referred to as tilting or lifting.

Referring back to FIGS. 14 and 15, the first lower pin 32b may provide a central axis of rotation for the lower arm 32, and the second lower pin 35a may provide a central axis of rotation for the joint 35 relative to the lower arm 32. The first upper pin Pa may provide a central axis for the upper arm 38, and the second upper pin Pd may provide a central axis of rotation for the joint 35 relative to the upper arm 38. The first and second lower pins 32b and 35a, the first and second upper pins Pa and Pd, the lower arm 32, and the upper arm 38 may form a four-bar linkage connecting the inner sleeve 31 of the pole 30 and the joint 35. In this case, a distance between the first lower pin 32b and the first upper pin Pa may be equal to a distance between the second lower pin 35a and the second upper pin Pd. A first straight line connecting the first upper pin Pa and the second upper pin Pd may be offset forward and upward from a second straight line connecting the first lower pin 32b and the second lower pin 35a.

Accordingly, regardless of the mode of the display device 1, an angle (θt) between the mount 20 to which the head 10 is coupled and the joint 35 may be maintained constant. The angle (θt) may be 90 degrees, or greater than or less than 90 degrees. For example, the display panel 10 of the head 10 may always face forward regardless of the mode of the display device 1.

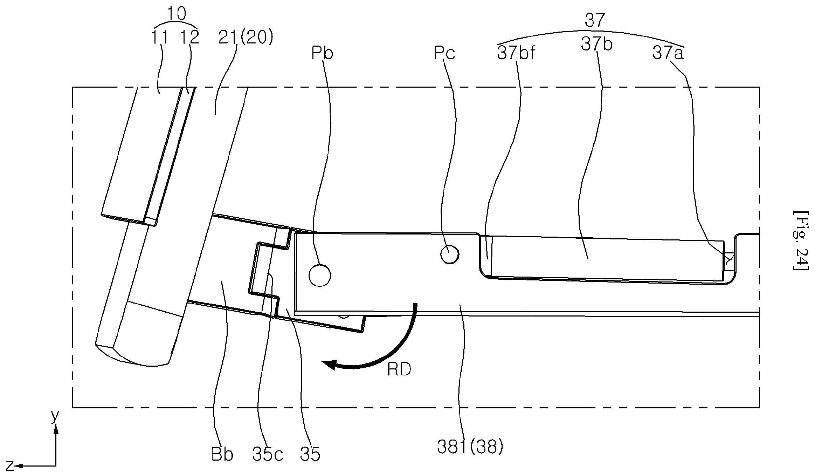

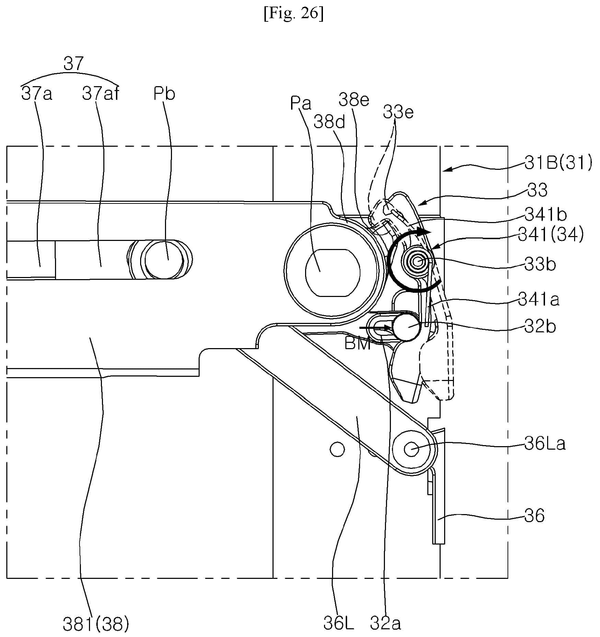

Referring to FIGS. 24 to 26, a user may hold the head 10 in the high position mode 1D and rotate the head 10 clockwise. In this case, the joint 35 may be rotated clockwise about the second lower pin 35a (e.g., by about 20 degrees) (see RD), and the lower arm 32 connected to the joint 35 may be pulled forward. In response to the movement of the lower arm 32, the first lower pin 32b may relatively move toward a rear end of the slot 32a of the lower arm 32 (see BM). In addition, in response to the movement of the lower arm 32, the protrusion 32c of the lower arm 32 may pull the contact portion 33c of the locker 33 forward (see FIGS. 21 and 22), and as a result, the locker 33 may be rotated clockwise about the locker pin 33b (see a curved arrow in FIG. 26).

Accordingly, the hook 33e of the locker 33 may be disengaged from the protrusion 38e of the cam 38d, and the user may rotate the head 10 counterclockwise while holding the head 10 to switch from the high position mode (1D) to the mid position mode (1C) and the low position mode (1B) (see FIG. 23). Meanwhile, when the user releases the hand holding the head 10 for disengaging the hook 33e, the joint 35 and the link 36L may return to their original positions, and the hook 33e may be engaged with the protrusion 38e again.

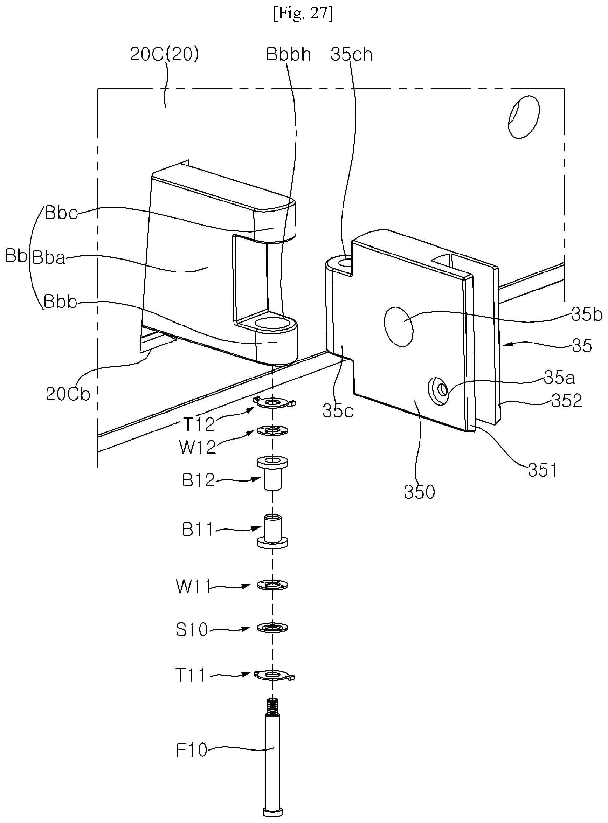

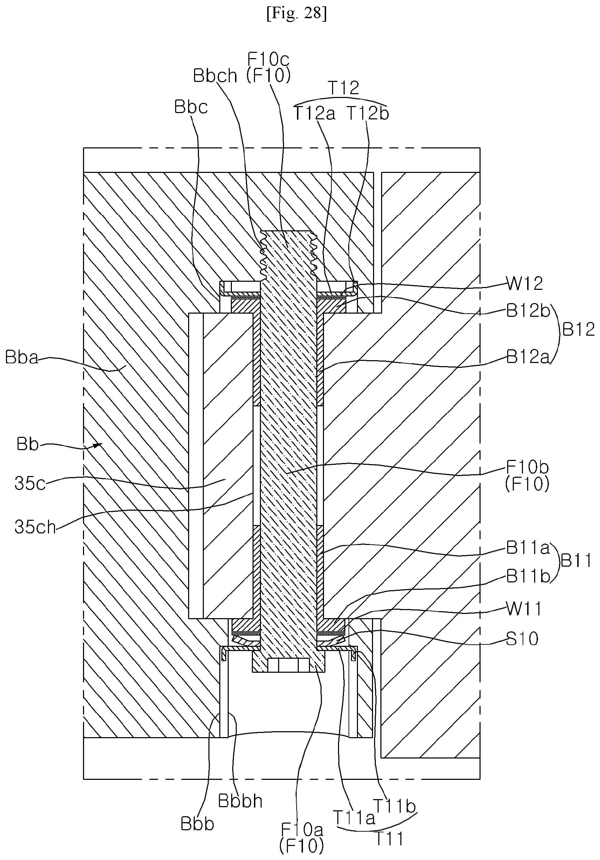

Referring to FIGS. 27 and 28, the joint 35 may include a joint body 350, a left part 351, a right part 352, and a middle part 35c. A hole 35b may be formed in the joint body 350. The lower arm 32 may be positioned between the left part 351 and the right part 352 (see FIG. 22). The middle part 35c may protrude from the joint body 350 toward the bracket Bb of the mount 20.

The bracket Bb may include a bracket body Bba, an upper part Bbc, and a lower part Bbb. The bracket body Bba may pass through the lower hole 20Cb of the mount cover 20C. The upper part Bbc and the lower part Bbb may protrude from the bracket body Bba toward the joint body 350. The middle part 35c may be positioned between the upper part Bbc and the lower part Bbb.

A body F10b of a shaft F10 may pass through a hole Bbbh of the lower part Bbb and a hole 35ch of the middle part 35c, and a fixing portion F10c of the shaft F10 may be fastened to a hole Bbch of the upper part Bbc. The shaft F10 may be a bolt having a head F10a, and a thread engaged with the hole Bbch of the upper part Bbc may be formed on an outer surface of the fixing portion F10c.

A cylinder B11a of a lower bush B11 may be inserted into the hole 35ch of the middle part 35c at a position adjacent to the head F10a, and may surround a portion of an outer surface of the body F10b of the shaft F10. A flange B11b of the lower bush B11 may be seated on the middle part 35c between the head F10a and the middle part 35c.

A lower fixing washer T11 may be positioned between the head F10a and the flange B11b, and may be fixed to the lower part Bbb. The lower fixing washer T11 may be a toothed lock washer, and a tooth T11b of the lower fixing washer T11 may be inserted into and fixed to a groove (not shown) formed inside the lower part Bbb.

A disc spring S10 may be positioned between a ring T11a of the lower fixing washer T11 and the flange B11b. The disc spring S10 may be convex toward the ring T11a, and may generate an elastic force in an axial direction of the shaft F10.

A lower washer W11 may be positioned between the disc spring S10 and the flange B11b, and may be penetrated by the body F10b of the shaft F 10.

A cylinder B12a of an upper bush B12 may be inserted into the hole 35ch of the middle part 35c at a position adjacent to the fixing portion F10c, and may surround a portion of the outer surface of the body F10b of the shaft F10. A flange B12b of the upper bush B12 may be seated on the middle part 35c.

An upper fixing washer T12 may be positioned on the flange B12b, and may be fixed to the upper part Bbc. The upper fixing washer T12 may be a toothed lock washer, and a tooth T12b of the upper fixing washer T12 may be inserted into and fixed to a groove (not shown) formed inside the upper part Bbc.

An upper washer W12 may be positioned between the flange B12b and a ring T12a of the upper fixing washer T12, and may be penetrated by the body F10b of the shaft F10.

Accordingly, the bracket Bb of the mount 20 may be rotatably coupled to the joint 35 about the shaft F10. The shaft F10 may be referred to as a fastening member F10, a hinge shaft F10, or a swivel shaft F10. Due to friction between the bracket Bb and the joint 35 generated by an elastic force of the disc spring S 10, a force greater than or equal to a predetermined level may be required to rotate the bracket Bb.

In addition, the lower fixing washer T11 may prevent a rotational force from being transferred to the head F10a of the shaft F10 fixed to the bracket Bb, thereby preventing loosening of coupling between the shaft F10 and the bracket Bb. Further, the upper fixing washer T12 may minimize or reduce wear of the upper part Bbc of the bracket Bb caused by rotation of the bracket Bb.

Referring to FIG. 29, a user may rotate the head 10 about a swivel axis Ax while holding the head 10. Here, the swivel axis Ax may be a central axis of the shaft F10 (see FIG. 28). For example, an angle through which the head 10 can be rotated about the swivel axis Ax may be 180 degrees. The action of a user rotating the head 10 about the swivel axis Ax may be referred to as swivel (swiveling).

Referring to FIGS. 1 to 29, a display device according to an aspect of the present disclosure may include: a head including a display panel; a pole elongated and positioned behind the head; a link extending in a direction intersecting the pole between the head and the pole, and having one end pivotably coupled to the pole; and a gas spring extending in a direction intersecting the link between the head and the link, coupled to the head, and pivotably coupled to the other end of the link.

The display device may further include: an upper arm which extends along the gas spring, to which the gas spring is coupled, and which has one end pivotably coupled to the pole; and a first shaft providing a pivot axis of the gas spring and movably coupled to the upper arm.

The display device may further include: a locker pin extending along a pivot axis of the upper arm and coupled to the pole adjacent to the one end of the upper arm; a locker rotatably coupled to the locker pin, the locker having a hook formed at an end of the locker; and an elastic member coupled to the locker, the elastic member being deformed or restored in a rotational direction of the locker, wherein the upper arm may include a cam forming the one end of the upper arm, the cam including a protrusion with which the hook of the locker is engaged or disengaged.

The elastic member may be a torsion spring wound around an outer circumference of the locker pin, wherein a portion of the elastic member may be supported by the pole, and another portion of the elastic member may be fixed to the locker.

The display device may further include: a lower arm extending along the gas spring and having one end pivotably coupled to the pole; and a first lower pin extending along the locker pin to provide a pivot axis of the lower arm, and coupled to the pole, wherein the lower arm may include: a slot which is elongated in a longitudinal direction of the lower arm and into which the first lower pin is movably inserted; and a protrusion protruding from the lower arm adjacent to the slot, wherein one side of the locker may be positioned on a rotational trajectory of the protrusion.

The display device may further include: a lower arm extending along the gas spring and having one end pivotably coupled to the pole; and a joint to which the other end of the lower arm and the other end of the upper arm are pivotably coupled at different positions, and connecting the lower arm and the head, a distance between a pivot axis of the one end of the upper arm and a pivot axis of the one end of the lower arm may be equal to a distance between a pivot axis of the other end of the upper arm and a pivot axis of the other end of the lower arm.

The gas spring may be extended or compressed between the one end and the other end of the upper arm, wherein one end of the gas spring may be movably inserted into a linear slot of the upper arm, and the other end of the gas spring may be fixed to the upper arm.

The gas spring may include: a cylinder forming the other end of the gas spring; and a rod forming the one end of the gas spring and reciprocating with respect to the cylinder.

The display device may further include a mount coupled to the gas spring between the head and the gas spring, wherein the head may be rotatably coupled to the mount about an axis intersecting the head, wherein a rotation center of the head may be eccentric with respect to a center of gravity of the head.

The head may include a first guide pin and a second guide pin, each protruding from a rear surface of the head toward the mount and positioned opposite each other with respect to the rotation center of the head, wherein the mount may include: a first slot into which the first guide pin is movably inserted; and a second slot into which the second guide pin is movably inserted, wherein rotation of the head may be restricted when the first guide pin contacts a boundary of the first slot.

The head may further include a rotating pin protruding from the rear surface of the head and movably inserted into the first slot, wherein the mount may further include: a fixed pin formed on the mount and spaced apart from the rotating pin; a cylinder pivotably coupled to the fixed pin; and a rod pivotably coupled to the rotating pin and movably coupled to the cylinder so as to move along the cylinder.

The mount may further include: a first damper adjacent to one end of the second slot and including a first damping pin; and a second damper adjacent to the other end of the second slot and including a second damping pin, wherein the second guide pin may press the first damping pin or the second damping pin depending on a rotation angle of the head.

The display device may further include: a bracket fixed to the head between the head and the gas spring; a joint connecting the bracket and the gas spring; and a shaft connecting the bracket and the joint, wherein the bracket may be rotatable about the shaft.

The joint may include a middle part protruding from the joint toward the bracket, wherein the bracket may include: an upper part; and a lower part positioned opposite the upper part with respect to the middle part, wherein the shaft may pass through the lower part and the middle part and be fixed to the upper part, and may have a head facing the middle part inside the lower part.

The display device may further include: a disc spring disposed between the head of the shaft and the middle part and generating an elastic force in an axial direction of the shaft; and a toothed lock washer disposed between the head of the shaft and the disc spring, and including a tooth fixed to the lower part.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings, and a configuration "B" described in another embodiment of the disclosure and the drawings may be combined with each other. Namely, although the combination between the configurations is not directly described, the combination is possible except in the case where it is described that the combination is impossible.

The above detailed description is to be construed in all aspects as illustrative and not restrictive. The scope of the present disclosure should be determined by reasonable interpretation of the appended claims, and all changes coming within the equivalents of the present disclosure are intended to be embraced in the scope of the present disclosure.

## Claims

1. A display device comprising:
a head including a display panel;
a pole elongated and positioned behind the head;
a link extending in a direction intersecting the pole between the head and the pole, and having one end pivotably coupled to the pole; and
a gas spring extending in a direction intersecting the link between the head and the link, coupled to the head, and pivotably coupled to the other end of the link.

2. The display device of claim 1, further comprising:
an upper arm which extends along the gas spring, to which the gas spring is coupled, and which has one end pivotably coupled to the pole; and
a first shaft providing a pivot axis of the gas spring and movably coupled to the upper arm.

3. The display device of claim 2, further comprising:
a locker pin extending along a pivot axis of the upper arm and coupled to the pole adjacent to the one end of the upper arm;
a locker rotatably coupled to the locker pin, the locker having a hook formed at an end of the locker; and
an elastic member coupled to the locker, the elastic member being deformed or restored in a rotational direction of the locker,
wherein the upper arm comprises a cam forming the one end of the upper arm, the cam including a protrusion with which the hook of the locker is engaged or disengaged.

4. The display device of claim 3, wherein the elastic member is a torsion spring
wound around an outer circumference of the locker pin, and
wherein a portion of the elastic member is supported by the pole, and another portion of the elastic member is fixed to the locker.

5. The display device of claim 3, further comprising:
a lower arm extending along the gas spring and having one end pivotably coupled to the pole; and
a first lower pin extending along the locker pin to provide a pivot axis of the lower arm, and coupled to the pole,
wherein the lower arm comprises:
a slot which is elongated in a longitudinal direction of the lower arm and into which the first lower pin is movably inserted; and
a protrusion protruding from the lower arm adjacent to the slot, and
wherein one side of the locker is positioned on a rotational trajectory of the protrusion.

6. The display device of claim 2, further comprising:
a lower arm extending along the gas spring and having one end pivotably coupled to the pole; and
a joint to which the other end of the lower arm and the other end of the upper arm are pivotably coupled at different positions, and connecting the lower arm and the head,
wherein a distance between a pivot axis of the one end of the upper arm and a pivot axis of the one end of the lower arm is equal to a distance between a pivot axis of the other end of the upper arm and a pivot axis of the other end of the lower arm.

7. The display device of claim 6, wherein the gas spring is extended or compressed between the one end and the other end of the upper arm, and wherein one end of the gas spring is movably inserted into a linear slot of the upper arm, and the other end of the gas spring is fixed to the upper arm.

8. The display device of claim 7, wherein the gas spring comprises:
a cylinder forming the other end of the gas spring; and
a rod forming the one end of the gas spring and reciprocating with respect to the cylinder.

9. The display device of claim 1, further comprising a mount coupled to the gas
spring between the head and the gas spring,
wherein the head is rotatably coupled to the mount about an axis intersecting the head, and
wherein a rotation center of the head is eccentric with respect to a center of gravity of the head.

10. The display device of claim 9, wherein the head comprises a first guide pin
and a second guide pin, each protruding from a rear surface of the head toward the mount and positioned opposite each other with respect to the rotation center of the head,
wherein the mount comprises:
a first slot into which the first guide pin is movably inserted; and
a second slot into which the second guide pin is movably inserted, and
wherein rotation of the head is restricted when the first guide pin contacts a boundary of the first slot.

11. The display device of claim 10, wherein the head further comprises a rotating pin protruding from the rear surface of the head and movably inserted into the first slot, and
wherein the mount further comprises:
a fixed pin formed on the mount and spaced apart from the rotating pin;
a cylinder pivotably coupled to the fixed pin; and
a rod pivotably coupled to the rotating pin and movably coupled to the cylinder so as to move along the cylinder.

12. The display device of claim 10, wherein the mount further comprises:
a first damper adjacent to one end of the second slot and including a first damping pin; and
a second damper adjacent to the other end of the second slot and including a second damping pin, and
wherein the second guide pin presses the first damping pin or the second damping pin depending on a rotation angle of the head.

13. The display device of claim 1, further comprising:
a bracket fixed to the head between the head and the gas spring;
a joint connecting the bracket and the gas spring; and
a shaft connecting the bracket and the joint,
wherein the bracket is rotatable about the shaft.

14. The display device of claim 13, wherein the joint comprises a middle part protruding from the joint toward the bracket,
wherein the bracket comprises:
an upper part; and
a lower part positioned opposite the upper part with respect to the middle part, and
wherein the shaft passes through the lower part and the middle part and is fixed to the upper part, and has a head facing the middle part inside the lower part.

15. The display device of claim 14, further comprising a disc spring disposed between the head of the shaft and the middle part and generating an elastic force in an axial direction of the shaft; and
a toothed lock washer disposed between the head of the shaft and the disc spring, and including a tooth fixed to the lower part.
